Europäisches Patentamt

European Patent Office

Office européen des brevets

(19)

(11) Numéro de publication : **0 341 130 B1**

## (12) FASCICULE DE BREVET EUROPEEN

(45) Date de publication du fascicule du brevet :
**21.10.92 Bulletin 92/43**

(51) Int. Cl.$^5$ : **G05D 1/08, B64G 1/26**

(21) Numéro de dépôt : **89401176.6**

(22) Date de dépôt : **25.04.89**

(54) **Procédé de basculement du moment d'inertie d'un corps rotatif libre dans l'espace jusqu'en une direction donnée.**

(30) Priorité : **26.04.88 FR 8805517**

(43) Date de publication de la demande :
**08.11.89 Bulletin 89/45**

(45) Mention de la délivrance du brevet :
**21.10.92 Bulletin 92/43**

(84) Etats contractants désignés :
**DE ES GB IT NL SE**

(56) Documents cités :
**FR-A- 1 372 563**
**FR-A- 1 468 913**
**FR-A- 2 581 966**

(56) Documents cités :
**GB-A- 1 514 745**
**GB-A- 2 040 513**
**US-A- 3 944 172**
**US-A- 4 193 570**

(73) Titulaire : **AEROSPATIALE Société Nationale Industrielle**
**37, Boulevard de Montmorency**
**F-75781 Paris Cédex 16 (FR)**

(72) Inventeur : **Blancke, Bernard**
**Le Chaumont, 16 chemin des Lauriers**
**F-06110 Le Cannet (FR)**

(74) Mandataire : **Rinuy, Santarelli**
**14, avenue de la Grande Armée**
**F-75017 Paris (FR)**

EP 0 341 130 B1

Jouve, 18, rue Saint-Denis, 75001 PARIS

## Description

D'une façon très générale, la présente invention concerne un procédé permettant de faire basculer le moment cinétique d'un corps libre, dans l'espace, en rotation autour de son axe principal d'inertie, dans une direction donnée en vue d'acquérir cette dernière et ce, à partir d'une valeur angulaire pouvant être très importante, dans un temps de basculement court avec une consommation d'énergie minimale et une erreur éventuelle en fin de manoeuvre, très faible par rapport à l'angle de basculement.

Le procédé ci-dessus peut recevoir de multiples applications, notamment dans tous les cas où le corps libre tournant (satellite, engin...) est, par exemple, en panne de gyromètres, dès lors qu'il comporte un détecteur de position angulaire, ce qui est le cas le plus courant.

On peut citer, par exemple, le cas d'un satellite en rotation plane "flat spin" qu'on peut faire se pointer vers un astre, comme la terre ou le soleil, en utilisant un détecteur terrestre ou solaire, et en commandant des impulsions de tuyères appropriées, de la manière qui sera décrite en détail dans la description.

On a bien décrit dans le brevet français n° 1 468 913 un "procédé et dispositif pour stabiliser, selon une direction fixe, un véhicule en rotation lente".

Mais ce procédé ne peut s'appliquer qu'à des véhicules présentant des caractéristiques très spécifiques.

En effet, ce procédé s'applique à un "véhicule aérien tournant à vitesse constante lente autour de son centre de gravité, dont l'axe de symétrie est confondu avec l'un des axes principaux de son ellipsoïde d'inertie, dont la configuration structurale est telle que deux moments d'inertie sont égaux entre eux, que l'angle que forment l'axe de symétrie et la direction fixe est inférieur à 10°, qui est soumis à l'instant initial à un mouvement à la Poinsot...".

Il apparait immédiatement que le procédé de stabilisation ci-dessus ne permettra pas de réorienter, par exemple, un satellite sur sa direction initiale, en cas de panne de gyrométrie, dès l'instant où l'axe de symétrie du satellite fera avec la direction fixe initiale un angle supérieur à 10°.

La présente invention concerne plus particulièrement un procédé permettant de faire basculer le moment cinétique ($H_i$) d'un corps libre, dans l'espace, en rotation stable autour de son axe principal d'inertie (Z) dans une direction inertielle donnée (soleil, terre, astre...) pour acquérir cette direction, ledit corps libre comportant, d'une part, des actionneurs pouvant exercer des couples (±$\Gamma$) d'intensité fixe et de durée modulable autour d'un axe (X) perpendiculaire à l'axe principal (Z), d'autre part, un détecteur d'écart angulaire ($D_F$) délivrant durant la rotation du corps libre un signal sinusoïdal d'écartométrie représentatif de l'angle ($\theta$) entre le plan (XZ) et le plan contenant X et la direction inertielle donnée (soleil, terre, astre...) vers laquelle on veut faire basculer le moment cinétique du corps libre.

Ce procédé se caractérise en ce qu'il consiste:

a) à identifier, éventuellement, la période exacte de rotation propre du corps libre, par la différence entre deux passages consécutifs par zéro du signal sinusoïdal d'écartométrie de l'angle ($\theta$) et donc la vitesse de spin ($\omega$) réelle instantanée, ce qui donne la valeur du moment cinétique initial ($H_i$ = I.$\omega$) du corps libre en rotation ;

b) lorsque le signal d'écartométrie de l'angle ($\theta$) passe par zéro avec une vitesse positive (respectivement négative), à donner par l'actionneur une première impulsion de couple positif (respectivement négatif) ($\Gamma$) autour de l'axe (X) pendant un temps précalculé ($T_1$), ce qui a pour effet de déplacer le moment cinétique initial ($H_i$) en ($H_1$), tandis que l'axe principal d'inertie (Z) du corps en rotation suit un mouvement de nutation autour de ($H_1$) vers un point ($Z_i$) ;

c) lorsque le signal d'écartométrie de l'angle ($\theta$) repasse par zéro avec une vitesse positive (respectivement négatif) et qui correspond à l'instant où l'axe principal d'inertie (Z) atteint le point ($Z_i$), à donner une deuxième impulsion de couple positif (respectivement négatif) ($\Gamma$) autour de l'axe (X) pendant un temps précalculé ($T_2$), ce qui a pour effet de déplacer le moment cinétique ($H_1$) en ($H_2$), tandis que l'axe principal d'inertie (Z) du corps en rotation suit un mouvement de nutation autour de ($H_2$) vers un point final ($Z_f$) ;

d) lorsque le signal d'écartométrie de l'angle ($\theta$) repasse par zéro avec une vitesse positive (respectivement négative) et qui correspond à l'instant où l'axe principal d'inertie (Z) atteint le point final ($Z_f$), à donner une troisième impulsion de couple positif (respectivement négatif) ($\Gamma$) autour de l'axe (X) pendant un temps précalculé ($T_1$) identique à celui de la première impulsion, ce qui a pour effet de déplacer le moment cinétique ($H_2$) en ($H_f$), lequel se confond, cette fois, avec la position finale ($Z_f$) de la nutation de l'axe principal d'inertie (Z) autour de ($H_2$), grâce à quoi la nutation finale est nulle et le basculement du moment cinétique initial ($H_i$) du corps en rotation vers la direction inertielle donnée (soleil, terre, astre...) a été obtenu en trois impulsions seulement et sans nutation résiduelle.

En d'autres termes pour amener le moment d'inertie $\overrightarrow{H_i}$ d'un corps en rotation, initialement en rotation approximativement autour de son axe principal d'inertie Z jusqu'en une orientation donnée $\overrightarrow{H_F}$, on applique transversalement à l'axe Z trois impulsions de couple dans un plan contenant $\overrightarrow{H_i}$ et

$\overrightarrow{H_F}$ , la première pendant un temps $T_1$ tel que, au bout d'un tour du satellite sur lui-même, l'axe Z vienne en $Z_1$ dans le plan bissecteur de $\overrightarrow{H_i}$ et $\overrightarrow{H_F}$ , tandis que le moment cinétique vient en $\overrightarrow{H_1}$ , la deuxième impulsion à l'instant où l'axe principal d'inertie est en $Z_1$ pendant un temps $T_2$ propre à amener le moment cinétique en une position $\overrightarrow{H_2}$ symétrique de $\overrightarrow{H_1}$ par rapport à ce plan bissecteur, et la troisième impulsion à l'instant où l'axe principal d'inertie est parallèle à $\overrightarrow{H_F}$ pendant une durée égale à $T_1$ .

D'autres caractéristiques, avantages et particularités de la présente invention ressortiront de la description qui en est donnée ci-après en référence aux dessins annexés sur lesquels :

la figure 1 est un schéma en perspective d'un satellite dans l'espace, d'axe principal GZ ;

la figure 2 en est un schéma simplifié lors d'une inclinaison de son moment cinétique ;

la figure 3 est la construction dans un plan perpendiculaire à GZ des vecteurs moments d'inertie et de rotation successifs, après une impulsion ;

la figure 4 est un diagramme similaire pour deux impulsions successives ;

la figure 5 est un diagramme similaire pour une pluralité d'impulsions successives ;

la figure 6 est un diagramme correspondant à une succession de trois impulsions de couples appliquées conformément à l'invention propres conjointement à incliner $\overrightarrow{H_i}$ en $\overrightarrow{H_F}$ , selon un angle $\theta$ ;

la figure 7 est un diagramme du satellite de la figure 1 comportant un détecteur angulaire dans le plan contenant l'axe GZ et la direction inertielle à atteindre ;

la figure 8 est un graphique en fonction du temps du signal du détecteur angulaire de la figure 7 ;

la figure 9 est un diagramme analogue à celui de la figure 6, avec une nutation initiale ;

la figure 10 est un diagramme montrant les moments cinétiques successifs ;

les figures 11, 12 et 13 sont les traces de simulations réalisées par la Demanderesse de l'application du procédé selon l'invention, à un satellite géostationnaire, la figure 11 montrant l'application deux fois consécutives, l'une pour un basculement vers le soleil, l'autre pour un basculement vers la terre ; la figure 12 montrant un signal écartométrique d'un détecteur solaire pilotant les impulsions de la tuyère, et la figure 13 montrant un basculement vers le soleil d'une grande amplitude.

On va maintenant décrire les phases successives du procédé selon l'invention pour faire basculer le moment cinétique d'un corps libre dans l'espace.

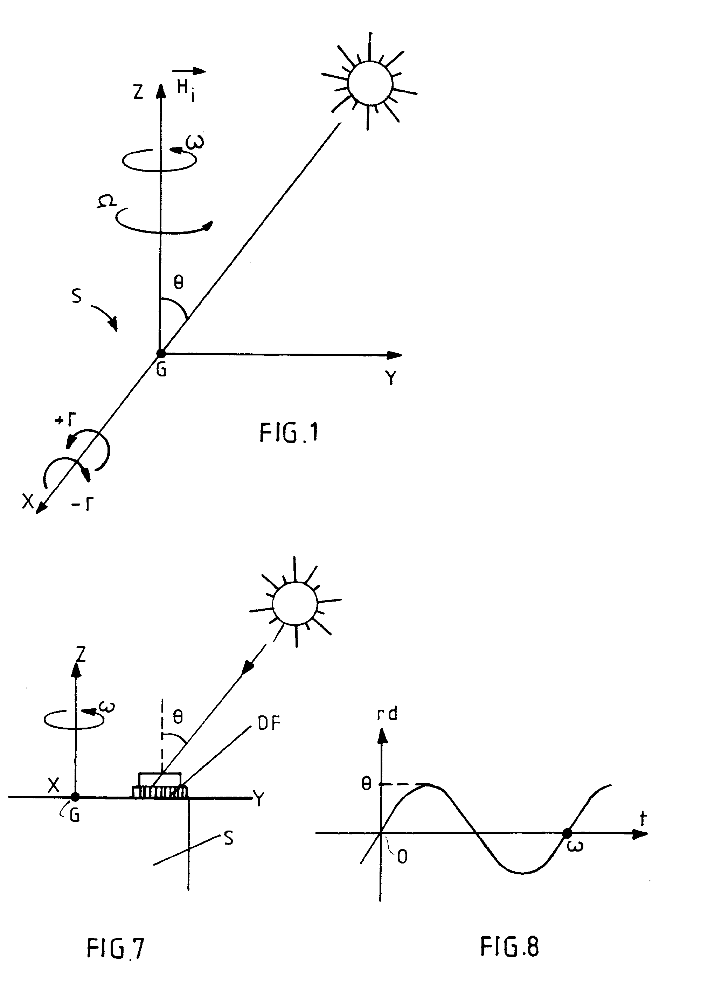

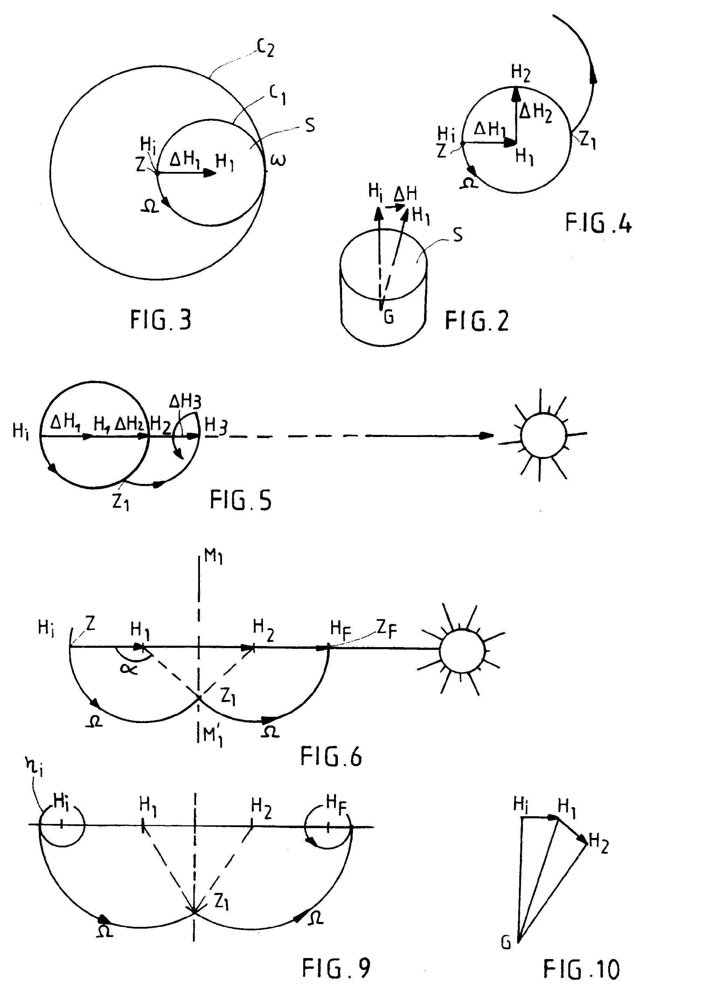

On rappellera tout d'abord qu'un corps rigide libre dans l'espace, tel qu'un satellite S, qui est en rotation autour de son axe d'inertie maximale Z, est normalement stable (voir figures 1 et 2).

Le moment cinétique initial $\overrightarrow{H_i}$ est confondu avec l'axe de rotation GZ, et est donné par la formule $H_i = I.\omega$, dans laquelle I est le moment principal d'inertie et $\omega$ la vitesse de rotation.

Si l'on donne (voir figure 2) une impulsion transverse $\overrightarrow{\Delta H}$ , par exemple au moyen d'une tuyère donnant un couple $\pm \Gamma$ autour de l'axe GX et perpendiculairement à l'axe GZ, pendant un temps court, le moment cinétique $\overrightarrow{H_i}$ se décale parallèlement à GX d'une valeur $\overrightarrow{\Delta H}$ , et vient en $\overrightarrow{H_1}$.

Le satellite S effectue alors un mouvement complexe qui peut être représenté par la rotation de deux cônes $C_1$ et $C_2$ l'un sur l'autre et sans glissement, comme cela est représenté en plan sur la figure 3.

Le grand cône $C_2$ d'axe GZ lié au satellite S roule sur le petit cône $C_1$ d'axe $GH_1$ qui est inertiellement fixe. La génératrice commune entre les deux cônes est le vecteur vitesse instantanée de rotation .

Ainsi, l'axe Z tourne autour de $\overrightarrow{H_1}$ avec une vitesse de nutation $\Omega$ qui est différente de $\omega$.

Si, à un instant donné du parcours décrit par Z autour de $\overrightarrow{H_1}$ , on actionne à nouveau la tuyère donnant le couple $\pm \Gamma$, cette dernière étant liée rigidement au satellite, il est évident que la direction de l'impulsion transverse $\Delta H$ qu'elle donnera dépendra de l'angle dont aura tourné le satellite autour de lui-même.

Si pour fixer les idées, on suppose que la vitesse de rotation $\omega$ du satellite S sur lui-même est de $2\pi$ rd/s soit 1 tour par seconde, tandis que la vitesse de nutation $\Omega$ est de $\frac{4}{3}\pi$ rd/s, soit 1 tour en 1,5 seconde - et que l'on donne deux impulsions (ou pulses) successives de la tuyère, l'une à l'instant initial et la suivante 0,75 seconde plus tard, on constate que, comme cela apparait sur la figure 4, l'axe Z a effectué à la vitesse $\Omega$ un demi tour autour de $\overrightarrow{H_i}$ et atteint la position $Z_1$, tandis que le moment cinétique $\overrightarrow{H_1}$ se décale instantanément d'une valeur $\overrightarrow{\Delta H_2}$ pour venir en $\overrightarrow{H_2}$ (pendant ce même temps, le satellite a tourné sur lui-même à la vitesse $\omega$ de 3/4 de tour) et l'axe Z va tourner à partir de la position $Z_1$, autour de $\overrightarrow{H_2}$ .

Il apparait clairement de l'exemple qui précède que si l'on veut faire basculer le moment cinétique du satellite S dans une direction donnée fixe, comme par exemple vers le soleil ou vers la terre, qui fait avec le plan XGZ, un angle $\theta$ déterminé, il faut que la tuyère donne des impulsions successives toutes les secondes, c'est-à-dire le temps correspondant à un tour sur lui-même du satellite à la vitesse et ce, avec, au moment initial, un angle $\theta$ entre le plan XZ et la direction du soleil (ou la terre).

Comme cela est représenté sur la figure 5, on voit que dans ce cas, le moment cinétique du satellite va bien basculer successivement de $\vec{H_i}$ à $\vec{H_1}$ puis $\vec{H_2}$, $\vec{H_3}$, etc... suivant une direction fixe donnée. On constate par ailleurs que, dans le cas pris à titre d'exemple où les couples d'impulsions données par les tuyères ont été supposés d'intensité fixe ainsi que de durée fixe, il subsiste, en fin de manoeuvre de basculement réduite à trois impulsions seulement, une nutation résiduelle qui reste très faible par rapport à l'angle de basculement.

Conformément à la présente invention, compte tenu de ces rappels théoriques, on peut faire basculer le moment cinétique du satellite S en trois impulsions réparties entre un point initial $H_i$ et un point final $H_F$ fixés à l'avance et ce, sans nutation résiduelle, en utilisant des tuyères délivrant des couples d'impulsions d'intensité fixe mais de durée modulable, étant à noter que celle-ci doit rester faible par rapport aux périodes propres du système, à savoir la rotation propre et la nutation du satellite.

A supposer que l'on veuille par exemple (voir figure 6) faire basculer le moment cinétique du satellite vers le soleil, entre une position initiale $H_i$ confondue avec l'axe initial Z et une position finale $H_F$, l'angle de basculement $\theta$ entre le plan XGZ et le soleil étant donné par $H_i - H_F$, et ce sans nutation résiduelle en $H_F$, on procède comme suit :

La durée de la première impulsion $H_i - H_1$ est réglée de manière que, au bout d'une période de rotation du satellite sur lui-même ($\omega$), l'axe Z du satellite se trouve en $Z_1$ sur la médiatrice $M_1 - M'_1$ de $H_i - H_F$ (ou dans le plan bissecteur des axes $\vec{GH_i}$ et $\overline{GH_F}$).

La durée de la troisième impulsion $H_2 - H_F$ est évidemment égale à la première puisque $Z_1$ se trouve sur la médiatrice $H_i - H_F$.

La durée de la deuxième impulsion doit être par suite égale à $H_i - H_F - (H_i - H_1 + H_2 - H_F)$, c'est-à-dire égale à $H_i - H_F - 2 (H_i - H_1)$.

Sans entrer dans des détails techniques sur le calcul préalable des durées des impulsions sur lesquels on reviendra de façon précise plus loin, on peut constater dès maintenant que, la dernière impulsion ayant lieu lorsque l'axe Z se trouve en $H_F$, la nutation en fin de manoeuvre est donc nulle.

On a vu précédemment que le satellite comportait habituellement un détecteur d'écart angulaire, ce qui permet, grâce au procédé conforme à l'invention, de faire basculer le moment cinétique du satellite dans une direction donnée fixe faisant un angle $\theta$ avec le plan XGZ, à l'instant initial.

Si l'on veut, par exemple, que cette direction fixe soit le soleil, on utilise le détecteur d'écart angulaire dont il est muni en tant que détecteur solaire un axe.

A cet effet, (voir figures 7 et 8) l'axe sensible est perpendiculaire à l'axe GZ, c'est-à-dire qu'il détecte les rotations autour d'un axe perpendiculaire à GX, grâce à la présence d'un détecteur classique à fente et barrettes de photodiodes $D_F$. En d'autres termes, on voit, en se référant plus particulièrement à la figure 7, qu'on détecte dans ce cas les rotations $\theta$ autour de l'axe GX perpendiculaire au plan de la figure.

Par ailleurs, on voit que lorsque le satellite S tourne autour de lui-même à sa vitesse $\omega$ et sans nutation, c'est-à-dire avant que ne soit appliquée la première impulsion de la tuyère délivrant le couple $\Gamma$, le détecteur $D_F$ délivre (voir figure 8) un signal sinusoïdal à la pulsation $\omega$ et d'amplitude $\theta$ correspondant à la trace des rayons du soleil sur les photodiodes.

Il apparait immédiatement que lorsque cette sinusoïde passe à zéro, c'est que le soleil se trouve dans le plan ZGX et que lorsque cette sinusoïde passe à son maximum, c'est que le soleil se trouve dans le plan ZGY, ce qui est le cas de la figure 7.

On voit que l'on peut utiliser ce signal pour mettre en phase les impulsions de basculement.

Si l'on dispose d'une tuyère donnant un couple d'impulsion $\Gamma$ le long de X et perpendiculairement à Z, il faut actionner cette tuyère lorsque la sinusoïde du signal passe à 0, grâce à quoi le moment cinétique du satellite se décalera dans la direction du soleil.

On peut en outre utiliser ce signal sinusoïdal pour déterminer l'angle de basculement à effectuer.

Si l'on veut, par exemple, se retrouver en final avec l'axe GZ face au soleil, il faut faire basculer le moment cinétique d'un angle $\theta$ égal à l'amplitude de la sinusoïde.

En revenant à la figure 6 et à ce qui a été exposé précédemment en ce qui concerne la détection de l'angle de basculement $\theta$ du moment cinétique en regard des figures 7 et 8, on peut maintenant définir de façon mathématique plus précise les différentes phases du procédé de basculement du moment cinétique d'un corps libre dans l'espace conforme à l'invention.

1) On identifie, éventuellement, la période exacte de rotation propre du satellite par la différence entre deux passages consécutifs du signal sinusoïdal $\theta$ par zéro, et donc la vitesse de rotation $\omega$ instantanée réelle. On en déduit la valeur du moment cinétique initial $H_i = I.\omega$;

2) Lorsque le signal $\theta$ passe par zéro avec une vitesse positive (respectivement négative), on donne une première impulsion de couple positif (res-

pectivement négatif) $\Gamma$ autour de X, pendant un temps $T_1$ ;

3) Lorsque le signal $\theta$ repasse par zéro avec une vitesse positive (respectivement négative), on donne une nouvelle impulsion de couple positif (respectivement négatif) $\Gamma$ autour de X, mais cette fois pendant un temps $T_2$. ;

4) Lorsque le signal $\theta$ repasse par zéro avec une vitesse positive (respectivement négative), on donne une dernière impulsion de couple positif (respectivement négatif) $\Gamma$ autour de X, pendant le même temps $T_1$ que la première impulsion.

Après avoir rappelé que conformément à l'invention :

a) les actuateurs, en l'occurence des tuyères, sont conçus pour exercer des couples $\pm\Gamma$ autour d'un axe perpendiculaire à l'axe d'inertie principale maximum GZ, en l'espèce l'axe GX, ces couples ayant une intensité fixe et une durée modulable mais faible devant les périodes propres du système, à savoir la rotation propre et la nutation ;

b) le détecteur d'écart angulaire donne l'angle $\theta$ entre le plan XZ (contenant l'axe principal d'inertie et l'axe des couples d'impulsion) et le plan contenant l'axe des couples d'impulsion et la référence intertielle (soleil, terre) vers laquelle on veut basculer.

On voit que les durées modulables $T_1$ et $T_2$ des couples d'intensité fixe peuvent être précalculées de manière suivante :

En se référant à la figure 6, il apparait que :

- la première impulsion déplace, quasi instantanément, le moment cinétique de $H_i$ en $H_1$ tel que l'on ait $H_i\, H_1 = \text{Arctg}\, \dfrac{\Gamma.\,T}{H}1$ où $\Gamma$ est le couple de la tuyère actionnée (il est rappelé que cette figure 6 décrit des angles autour de X) ;

- L'axe Z du satellite entame alors un mouvement de nutation autour de $H_1$ ; lorsqu'il est en $Z_1$, a lieu la deuxième impulsion qui déplace $H_1$ en $H_2$ en inclinant le moment cinétique d'un angle égal à $\text{Arctg}\, \dfrac{\Gamma.T}{H}2)$ avec H étant le module moyen du moment cinétique ;

- La dernière impulsion a lieu lorsque l'axe Z est en $H_F$, d'où résulte que la nutation finale est donc nulle.

- Pour minimiser la consommation d'énergie, c'est-à-dire le trajet $H_i\, H_F$, on doit se déplacer toujours dans la même direction (en l'occurence celle du soleil), ce qui impose d'actionner les tuyères à chaque période de rotation propre (spin), c'est-à-dire à chaque rotation du satellite sur lui-même autour de l'axe GZ ;

Si l'on désigne par A, B et C, les moments d'inertie principaux du satellite autour des axes GX, GY et GZ, il est évident que le rapport (période de nutation/période de spin), est donné par K =

$\sqrt{\dfrac{A.B}{(C-A)\,.\,(C-B)}}$ ce rapport définit l'angle $\alpha$ de la figure 6 entre $H_i\, H_1$ et $H_1\, Z_1$, c'est-à-dire l'angle d'ouverture de la nutation de l'axe Z autour de $H_1$ pour atteindre le point Z, par $\alpha = \dfrac{2\,\pi}{K}$

On a donc : $H_i\, H_1 = H_2\, H_F = \dfrac{H_i\, H_F}{2(1\,-\,\text{Cos}\,\alpha)}$ d'où $H_1\, H_2 = -\,2\, H_i\, H_1\, \text{Cos}\,\alpha$, ce qui permet de précalculer les durèes d'impulsion $T_1$ et $T_2$, à savoir $T_1$ pour les première et troisième impulsions et $T_2$ pour la deuxième impulsion.

On fera ci-après quelques remarques d'ordre technique concernant la mise en oeuvre du procédé conforme à l'invention :

- Il est intéressant de noter que le procédé de basculement conforme à l'invention est en théorie insensible à l'existence d'une nutation initiale $n_i$ en $H_i$ ; en effet, celle-ci, comme cela est représenté sur la figure 9, ne fait que se transférer en $H_F$ (aux erreurs près quant aux incertitudes sur la durée réelle des impulsions) et on a dans ce cas, en fin de manoeuvre, une nutation résiduelle $n_f$ mais qui est très faible par rapport à l'angle de basculement.

- Il faut d'ailleurs noter que dans le cas ci-dessus, le module du moment cinétique global a un peu varié au cours de la manoeuvre, car on a dans ledit cas utilisé une tuyère de roulis pur (c'est-à-dire donnant un couple autour de l'axe X).

Au cours de la deuxième impulsion, cette variation (d'ailleurs très faible si l'angle de basculement est faible) peut être compensée si la période de nutation est proche de deux fois la période de spin (voir figure 10) ; si on prend un cas moins favorable, par exemple une période de spin valant le tiers de la période de nutation, on aurait une position $H'_2$ (voir figure 10) ; l'on peut, si on le désire, éliminer la variation résultante du module du moment cinétique en appliquant une impulsion simultanée autour de Z définie par

$$\overrightarrow{H'_2\ \ H_2}\,.$$

- Il est bien évident que pour minimiser au sens le plus strict la consommation, il faudrait utiliser, en même temps que la tuyère de roulis (couple autour de X) une tuyère de lacet (couple autour de Z) de manière adéquate, pour aller en ligne droite de $H_i$ à $H_F$.

Il est toutefois important de noter que ceci ne peut être intéressant que pour des angles de basculement importants.

- Le temps de basculement minimum est déterminé par la contrainte de consommation minimum ; en l'occurence il est de deux périodes de spin, ce qui est faible.

- Il n'est pas nécessaire que le détecteur d'écart angulaire ait son axe sensible exactement parallèle à l'axe d'impulsion de couple GX, à partir du moment où le décalage entre les deux est connu et qu'il suffit d'en tenir compte par la détermination des instants d'application des impulsions.

- Le procédé voit sa précision se dégrader au fur et à mesure que le rapport K se rapproche de 1, valeur pour laquelle le basculement sans nutation résiduelle est impossible. Ceci est toutefois un cas particulier qui n'intéresse pas les satellites mais une forme et une composition voisines de celle d'un disque plat.

On appréciera que le principe de la figure 6 n'exige pas l'égalité des moments d'inertie A et B. Leur éventuelle différence apparait généralement dans un terme négligeable dans l'équation d'EULER, et, si elle venait à être trop importante, il serait toujours possible d'en tenir aisément compte dans le calcul des impulsions.

La Demanderesse a procédé à des simulations concernant l'application du procédé selon l'invention à un satellite géostationnaire présentant les caractéristiques particulières suivantes : en rotation lente de 2,5°/s autour de son axe d'inertie principale ; les axes de symétrie du satellite ne sont pas confondus avec les axes principaux d'inertie (6° d'écart) ; le rapport des moments d'inertie principaux vaut C/A = 5.

La figure II montre les traces de différentes directions :
- moment cinétique ;
- axe Z du satellite ;
- direction satellite - soleil ;
- direction satellite - terre ;

repérées dans le repère orbital local à savoir azimuth vers l'EST, élévation vers le NORD, en regardant la terre.

Ce repère n'est pas inertiel puisqu'il est lié à la terre et on y voit le défilement apparent du soleil en pointillé.

La figure II montre en fait l'application du procédé selon l'invention, deux fois consécutives :
. une première fois pour basculer de 20° vers le soleil et ce, en utilisant un détecteur solaire à un axe ;
. une deuxième fois pour basculer de 23° vers la terre et ce, en utilisant un détecteur terrestre à un axe.

Les cercles décrits par l'axe Z du satellite en période de manoeuvre ne sont pas de la nutation mais sont dus au décalage de 6° entre l'axe principal d'inertie et l'axe géométrique, ceci étant observable au début de la manoeuvre où la nutation est nulle et

l'angle entre $\overrightarrow{H}$ et $\overrightarrow{Z}$ est de 6°. Le décalage de 6° engendre une rotation de l'axe géométrique autour de l'axe principal, à la vitesse de spin ; ce mouvement existe indépendamment de la nutation et n'a d'effet que sur la détection. Il suffit de corriger celle-ci de ce décalage, qui est connu a priori (il s'agit en fait d'un calage, effectué au sol, des détecteurs par rapport aux axes des satellites). En tout état de cause, ce qui est important, c'est de très bien connaître l'orientation des actionneurs (tuyères) par rapport aux détecteurs.

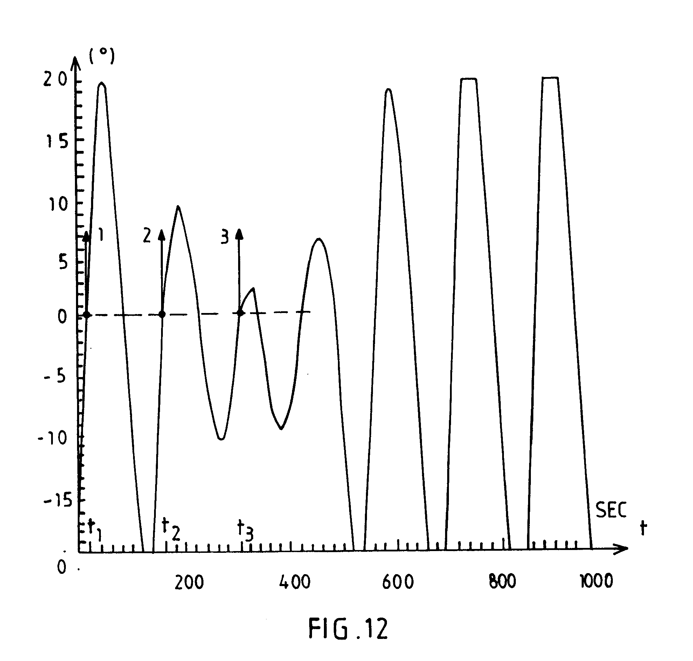

La figure 12 montre le signal écartométrique, en l'occurence d'un détecteur solaire, qui pilote les instants $t_1$, $t_2$ et $t_3$ d'impulsion de la tuyère ; ces instants correspondent à trois passages à zéro du signal avec une vitesse positive. La durée totale du basculement vers le soleil est de 2 périodes de spin, soit 288 secondes pour une vitesse de rotation $\omega$ = 2,5°/s.

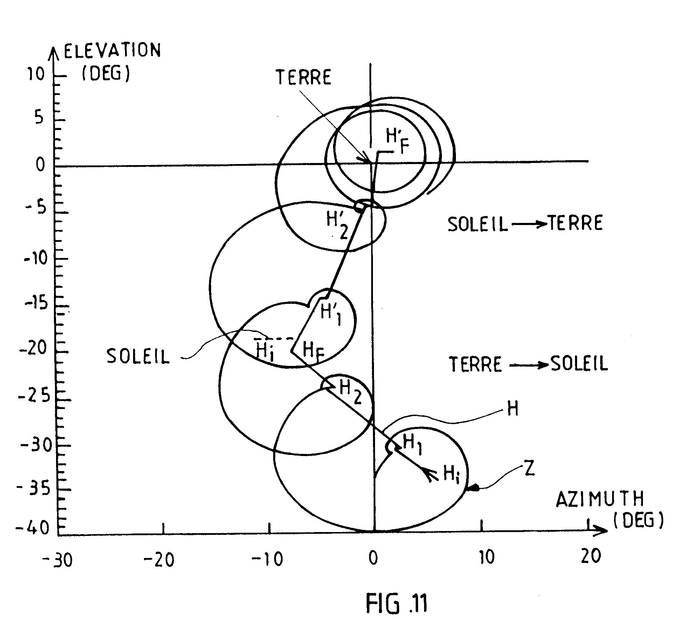

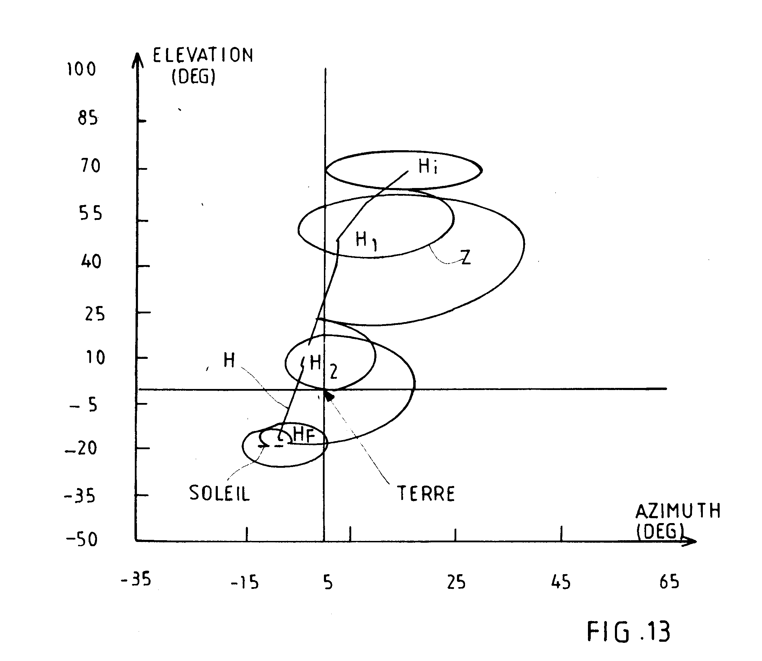

Enfin, la figure 13 est analogue à la figure 11 mais montre cette fois un basculement vers le soleil d'une amplitude très importante de 90°.

Il est à noter que les traces sont déformées par le système de projection aux latitudes élevées.

On peut constater que le procédé de basculement conforme à l'invention présente des différences importantes et avantageuses par rapport au procédé de stabilisation selon une direction fixe du brevet français précité n° 1 468 913.

C'est ainsi que l'on peut citer :
a) Les moments d'inertie du satellite peuvent être quelconques (sous réserve que K ≠ 1) et il n'est pas nécessaire d'en avoir deux égaux entre eux ;
b) La condition sur les rapports d'inertie selon l'invention : $K = \sqrt{\dfrac{A.B}{(C-A).(C-B)}}$ = 1 soit (C-A) . (C-B) ≠ A.B est bien moins restrictive que la condition 1<C/A<2. C'est ainsi en particulier que l'on peut avoir $\dfrac{C}{A}$ = 5 (voir simulations des figures 11, 12, 13) ;
c) Le détecteur d'écartométrie peut posséder 1 seul axe sensible de détection au lieu de 2.
d) Il suffit d'exercer des couples de tuyères autour d'un seul axe au lieu de deux, en particulier aux petits angles de basculement.

Cependant, dans le cas où l'on veut, en plus, contrôler le module du moment cinétique, il devient nécessaire d'appliquer des couples autour de deux axes.
e) L'angle de basculement peut être très important comme par exemple le cas de simulation avec 90° de basculement de la figure 13.
f) Le but du procédé selon la présente invention est un basculement vers une direction fixe, comme la phase d'acquisition par exemple et non pas une stabilisation précise sur une direction fixe avec un décalage initial inférieur à 10°.

## Revendications

1. Procédé permettant de faire basculer le moment cinétique ($\overrightarrow{H_i}$) d'un corps libre, dans l'espace, en rotation stable autour de son axe principal d'inertie (Z) dans une direction inertielle donnée (soleil, terre, astre...) pour acquérir cette direction, ledit corps libre comportant d'une part des actionneurs pouvant exercer des couples ($\pm\Gamma$) d'intensité fixe et de durée modulable autour d'un axe ($\overrightarrow{X}$) perpendiculaire à l'axe principal (Z) ; d'autre part un détecteur d'écart angulaire ($D_F$) délivrant durant la rotation du corps libre un signal sinusoïdal d'écartométrie de l'angle ($\theta$) entre le plan (XZ) et le plan contenant l'axe de couple (X) et la direction inertielle donnée (soleil, terre, astre...) vers laquelle on peut faire basculer le moment cinétique du corps libre, ledit procédé étant caractérisé en ce qu'il consiste :

a) à identifier, éventuellement, la période de rotation propre du corps libre, par la différence entre deux passages consécutifs par zéro du signal sinusoïdal de l'angle ($\theta$) et donc la vitesse de spin ($\omega$) réelle instantanée, ce qui donne la valeur du moment cinétique initial ($H_i = I.\omega$) du corps libre en rotation ;

b) lorsque le signal d'écartométrie de l'angle ($\theta$) passe par zéro avec une vitesse positive (respectivement négative), à donner par l'actionneur une première impulsion de couple positif (respectivement négatif) ($\Gamma$) autour de l'axe ($\overrightarrow{X}$) pendant un temps précalculé ($T_1$), ce qui a pour effet de déplacer le moment cinétique initial ($\overrightarrow{H_i}$) en ($\overrightarrow{H_1}$) tandis que l'axe principal d'inertie (Z) du corps en rotation suit un mouvement de nutation autour de ($\overrightarrow{H_1}$) vers un point ($Z_i$) ;

c) lorsque le signal d'écartométrie de l'angle ($\theta$) repasse par zéro avec une vitesse positive (respectivement négative) et qui correspond à l'instant où l'axe principal d'inertie (Z) atteint le point ($Z_i$), à donner une deuxième impulsion de couple positif (respectivement négatif) ($\Gamma$) autour de l'axe ($\overrightarrow{X}$) pendant un temps précalculé ($T_2$), ce qui a pour effet de déplacer le moment cinétique ($\overrightarrow{H_1}$) en ($\overrightarrow{H_2}$), tandis que l'axe principal d'inertie (Z) du corps en rotation suit un mouvement de nutation autour de ($H_2$) vers un point final ($Z_F$) ;

d) lorsque le signal d'écartométrie de l'angle ($\theta$) repasse par zéro avec une vitesse positive (respectivement négative) et qui correspond à l'instant où l'axe principal d'inertie (Z) atteint le point final ($Z_F$), à donner une troisième impulsion de couple positif (respectivement négatif) ($\Gamma$) autour de l'axe ($\overrightarrow{X}$) pendant un temps précalculé ($T_1$) identique à celui de la première impulsion, ce qui a pour effet de déplacer le moment cinétique ($\overrightarrow{H_2}$) en ($\overrightarrow{H_F}$), lequel se confond, cette fois, avec la position finale ($Z_F$) de la nutation de l'axe principal d'inertie (Z) autour de ($H_2$), grâce à quoi la nutation finale est nulle et le basculement du moment cinétique initial ($\overrightarrow{H_i}$) du corps en rotation vers la direction inertielle donnée (soleil, terre, astre...) a été obtenu en trois impulsions seulement et sans nutation résiduelle.

2. Procédé selon la revendication 1, caractérisé en ce que, pour minimiser au maximum la consommation d'énergie sur le trajet du moment cinétique du corps en rotation entre le moment initial et le moment final

$$(\overrightarrow{H_i} - \overrightarrow{H_F})$$

$\overrightarrow{H_F}$), on actionne les actionneurs délivrant les impulsions de couple ($\Gamma$), à chaque période de spin, c'est-à-dire à chaque rotation ($\omega$) du corps sur lui-même autour de l'axe principal d'inertie (Z), grâce à quoi les différents déplacements du moment cinétique ($H_i$ - $H_1$ - $H_2$ -$H_F$) se font toujours dans un même plan contenant la direction inertielle donnée vers laquelle on veut basculer.

3. Procédé selon l'une quelconque des revendications 1 ou 2, caractérisé en ce que les durées d'impulsion ($T_1$) pour la première et la troisième impul sions et ($T_2$) pour la deuxième impulsion, sont précalculées à partir du rapport période de nutation/période de spin lui même imposé par les rapports d'inerties principales du corps en rotation dans l'espace $K = \sqrt{\dfrac{A.B.}{(C-A).(C-B)}}$, lequel définit l'angle $\alpha = \dfrac{2\pi}{K}$ dans lequel $\alpha$ est l'angle d'ouverture de la nutation de l'axe (Z) autour de ($H_1$) pour que ledit axe passe de la position initiale ($H_i$) à la position ($Z_i$), d'où résulte $H_i\,H_1 = H_2\,H_F = \dfrac{H_i\,H_F}{2(1 - \cos\alpha)}$ ou $H_1\,H_2 = -2\,H_i\,H_1\,\cos\alpha$, ce qui définit les durées d'impulsion $T_1$ et $T_2$.

4. Procédé selon l'une quelconque des revendications 1 à 3, caractérisé en ce que dans le cas où existe une nutation initiale au moment où l'on veut appliquer la manoeuvre au moment cinétique initial ($H_i$), ladite nutation initiale est purement et simplement transférée au moment cinétique final $H_F$.

**Patentansprüche**

1. Verfahren zum Ausrichten des Drehimpulses ($H_i$) eines sich stabil um seine Hauptträgheitsachse (Z) drehenden freien Körpers zur Annahme einer vorgegebenen Trägheitsrichtung (Sonne, Erde, Himmelskörper...), wobei der freie Körper einerseits Betätigungsmittel, die Drehmomente von bestimmter Stärke und von variabler Dauer um eine Achse ($\vec{X}$) senkrecht zur Hauptachse (Z) hervorrufen können, und andererseits einen Drehwinkel-Detektor ($D_F$) aufweist, der während der Drehung des freien Körpers ein sinusförmiges Signal abgibt zur Messung der Größe des Winkels ($\theta$) zwischen der Ebene (XZ) und der Ebene, welche die Drehmomentenachse (X) und die vorgegebene Trägheitsrichtung (Sonne, Erde, Himmelskörper...), zu welcher man den Drehimpuls des freien Körpers ausrichten lassen kann, enthält, dadurch gekennzeichnet, daß es folgende Schritte umfaßt:

a) gegebenenfalls Feststellung der Eigenumdrehungszeit des freien Körpers über die Differenz zwischen zwei aufeinanderfolgenden Null-Durchgängen des sinusförmigen Signals des Winkels ($\theta$) und folglich der tatsächlichen momentanen Spingeschwindigkeit ($\omega$), was den Wert des Anfangsdrehimpulses ($H_i = I.\omega$) des freien drehenden Körpers liefert;

b) wenn das Meßsignal für die Größe des Winkels ($\theta$) Null mit einer positiven (bzw. negativen) Geschwindigkeit durchläuft, Abgabe eines ersten positiven (bzw. negativen) Drehmomenten-Impulses ($\Gamma$) um die Achse ($\vec{X}$) über eine vorberechnete Zeit ($T_1$) hinweg durch die Betätigungsmittel, was eine Verlagerung des Anfangsdrehimpulses ($\vec{H_i}$) nach ($\vec{H_1}$) bewirkt während die Hauptträgheitsache (Z) des drehenden Körpers einer Taumelbewegung um ($\vec{H_1}$) zu einem Punkt ($Z_i$) folgt;

c) wenn das Meßsignal für die Größe des Winkels ($\theta$) wieder den Nullpunkt mit positiver (bzw. negativer) Geschwindigkeit durchläuft, was dem Augenblick entspricht, in dem die Hauptträgheitsachse (Z) den Punkt ($Z_i$) erreicht, Erzeugung eines zweiten positiven

(bzw. negativen) Drehmomentenimpulses ($\Gamma$) um die Achse ($\vec{X}$) während einer vorberechneten Zeit ($T_2$), was eine Verlagerung des Drehimpulses ($\vec{H_1}$) nach ($\vec{H_2}$) bewirkt, während die Hauptträgheitsachse (Z) des drehenden Körpers einer Taumelbewegung um ($H_2$) zu einem Endpunkt ($Z_F$) folgt;

d) wenn das Signal für die Größe des Winkels ($\theta$) erneut den Nullpunkt mit positiver (bzw. negativer) Geschwindigkeit durchläuft, was dem Augenblick entspricht, an dem die Hauptträgheitsachse (Z) den Endpunkt ($Z_F$) erreicht, Erzeugung eines dritten positiven (bzw. negativen) Drehmomentimpulses ($\Gamma$) um die Achse ($\vec{X}$) während einer vorberechneten Zeit ($T_1$), die mit der des ersten Impulses identisch ist, was eine Verlagerung des Drehimpulses ($\vec{H_2}$) nach ($\vec{H_F}$) bewirkt, wobei er dieses Mal mit der Endlage ($Z_F$) der Taumelbewegung der Hauptträgheitsachse (Z) um ($H_2$) zusammenläuft, wodurch die Endtaumelbewegung zu Null wird und die Ausrichtung des Anfangsdrehimpulses ($\vec{H_i}$) des drehenden Körpers auf die vorgegebene Trägheitsrichtung (Sonne, Erde, Himmelkörper ...) mit nur drei Impulsen und ohne verbleibende Taumelbewegung erhalten wurde.

2. Verfahren nach Anspruch 1, dadurch gekennzeichnet, daß zur maximalen Energie-Verbrauchsminialisierung auf der Bahn des Drehimpulses des drehenden Körpers zwischen dem Anfangsimpuls und dem Endimpuls

$$(\vec{H_i} \; - \; \vec{H_F})$$

die Betätigungsmittel, welche die Drehmomentenimpulse ($\Gamma$) liefern, zu jeder Spinzeit, d. h. bei jeder Eigenumdrehung ($\omega$) des Körpers um die Hauptträgheitsachse (Z), betätigt werden, wodurch die verschiedenen Verlogerungen des Drehimpulses ($H_i$ - $H_1$ - $H_2$ - $H_F$) immer in derselben Ebene stattfinden, welche die vorgegebene Trägheitsrichtung enthält, in die man ausrichten will.

3. Verfahren nach einem der Ansprüche 1 oder 2, dadurch gekennzeichnet, daß die Impulsdauern ($T_1$) für den ersten und den dritten Impuls sowie die ($T_2$) für den zweiten Impuls auf der Grundlage des Verhältnisse Taumelzeit/Spinzeit berechnet werden, das seinerseits durch die Beziehung

$$K=\sqrt{\frac{A \cdot B}{(C-A) \cdot (C-B)}}$$ aus den Hauptträgheiten des sich im Raum drehenden Körpers bestimmt wird, wobei mit dieser Beziehung der Winkel $\alpha = \frac{2\pi}{K}$, der den Öffnungswinkel der Taumelbewegung der Achse (Z) um $(H_1)$, um von der Anfangsposition $(H_i)$ zur Position $(Z_i)$ zu gelangen, ermittelbar ist, woraus $H_i$ $H_1$ = $H_2$ $H_F$ $=\frac{H_i H_F}{2(1 - \cos\alpha)}$ oder $H_1$ $H_2$ = - 2 $H_i H_1$ Cos $\alpha$ folgt, aus welchen Ausdrücken die Impulsdauern $T_1$ und $T_2$ ableitbar sind.

4. Verfahren nach einem der Ansprüche 1 bis 3, dadurch gekennzeichnet, daß im Falle des Vorhandenseins einer Anfangstaumelbewegung in dem Zeitpunkt, in dem man das Manöver auf den Anfangsdrehimpuls $(H_i)$ anwenden will, die Anfangstaumelbewegung schlicht und einfach auf den Enddrehimpuls $H_F$ übertragen wird.

**Claims**

1. A method for tilting the kinetic moment $(\overrightarrow{H_i})$ of a free body in space in stable rotation about its principal axis of inertia (Z) into any given inertial direction (sun, earth, astral body ...) so as to attain this direction, said free body comprising on the one hand actuators adapted to exert torques ($\pm \Gamma$) of fixed intensity and adjustable duration around an axis $(\overrightarrow{X})$ perpendicular to the principal axis (Z) and on the other hand an angular deviation detector $(D_F)$ which during the rotation of the free body generates a sinusoidal deviation measurement signal indicative of the angle $(\theta)$ between the plane (XZ) and the plane containing the axis of the torque (X) and the given inertial direction (sun, earth, astral body ...) towards which the kinetic moment of the free body can be tilted said procedure being characterised in that it consists in:

a) identifying where appropriate the period of own rotation of the free body from the difference between two successive passages through zero of the sinusoidal signal of the angle $(\theta)$ and therefore the instantaneous real speed of spin $(\omega)$, which gives the value of the initial kinetic moment $(H_i = I.\omega)$ of the free body in rotation;

b) when the difference measuring signal for the angle $(\theta)$ passes through zero with a positive (or negative) speed, imparting by means of the actuator a first positive (or negative) torque impulse $(\Gamma)$ about the axis $(\overrightarrow{X})$ for a predetermined period $(T_1)$, thereby displacing the initial kinetic moment $(\overrightarrow{H_i})$ to $(\overrightarrow{H_1})$ while the principal axis of inertia (Z) of the body in rotation follows a nutation movement around $(H_1)$ to a point $(Z_i)$;

c) when the deviation measurement signal for the angle $(\theta)$ again passes through zero with a positive (or negative) speed, correspondingly to the instant when the principal axis of inertia Z aches the point $(Z_i)$, imparting a second positive (or negative) torque impulse $(\Gamma)$ around the axis $(\overrightarrow{X})$ for a predetermined time $(T_2)$, which has the effect of displacing the kinetic moment $(\overrightarrow{H_1})$ to $(\overrightarrow{H_2})$, while the principal axis of inertia (Z) of the body in rotation follows a nutation movement around $(H_2)$ to a final point $(Z_F)$;

d) when the deviation measurement signal for the angle $(\theta)$ again passes through zero with a positive (or negative) speed, corresponding to the instant when the principal axis of inertia (Z) reaches the final point $(Z_F)$, imparting a third positive (or negative) torque impulse $(\Gamma)$ around the axis $(\overrightarrow{X})$ for a predetermined time $(T_i)$ identical to that of the first impulse, which has the effect of displacing the kinetic moment $(\overrightarrow{H_2})$ to $(\overrightarrow{H_F})$, which now merges with the final position $(Z_F)$ of the nutation of the principal axis of inertia (Z) around $(H_2)$, whereby nutation is nil and the tilting of the initial kinetic moment $(\overrightarrow{H_i})$ of the body in rotation towards the given inertial direction (sun, earth, astral body ...) has been obtained by only three impulses and without residual nutation.

2. A method according to claim 1, characterised in that, in order to minimise as much as possible the energy consumption on the path of the kinetic moment of the body in rotation between the initial moment and the final moment $(\overrightarrow{H_i} - \overrightarrow{H_F})$ the actuators exerting the torque impulses $(\Gamma)$ are actuated at each period of spin, that is to say at each rotation $(\omega)$ of the body about itself around the principal axis of inertia (Z), whereby the different displacements of the kinetic moments ($H_i$ - $H_1$ - $H_2$ - $H_F$) occur always in the same plane containing the given inertial direction towards which the tilt is to be made.

3. A method according to either of claims 1 or 2, characterised in that the impulse durations ($T_1$) for the first and the third impulses and ($T_2$) for the second impulse are predetermined starting from the nutation period/spin period relationship which itself as imposed by the ratio between the principal inertias of the body in rotation in space $K = \sqrt{\dfrac{A.B}{(C-A).(C-B)}}$ which defines the angle $\alpha = \dfrac{2\pi}{K}$ where $\alpha$ is the aperture angle of the nutation of the axis (Z) around ($H_1$), so that said axis passes from the initial position ($H_i$) into the position ($Z_i$), from which it follows that

$$H_i\,H_1 \;=\; H_2\,H_F = \frac{H_i\,H_F}{2(1 \;-\; \cos\alpha)}$$

where $H_1\,H_2 = -\,2\,H_i\,H_1 \cos\alpha$, which defines the impulse durations $T_1$ and $T_2$.

4. A method according to any of claims 1 to 3, characterised in that when an initial nutation exists at the moment when the manoeuvre is to be applied the initial kinetic moment ($H_i$) said initial nutation is merely transferred to the final kinetic moment ($H_F$).

FIG.1

FIG.7

FIG.8

FIG.3

FIG.2

FIG.4

FIG.5

FIG.6

FIG.9

FIG.10

FIG .11

FIG.12

EP 0 341 130 B1

FIG .13

EP 0 341 130 B1